# EUROPÄISCHE PATENTSCHRIFT

(11) **EP 2 737 387 B1**
(45) Veröffentlichungstag und Bekanntmachung des Hinweises auf die Patenterteilung: **13.06.2018**
(21) Anmeldenummer: 12740348.3
(22) Anmeldetag: 23.07.2012
(51) Int. Cl.: G06F 3/01, G06F 3/0354

(54) **BEDIENVORRICHTUNG**
OPERATING DEVICE
DISPOSITIF DE COMMANDE

(30) Priorität: 25.07.2011 DE 102011079711
(43) Veröffentlichungstag der Anmeldung: 04.06.2014
(73) Patentinhaber: Continental Automotive GmbH, 30165 Hannover (DE)
(72) Erfinder: KERN, Thorsten, Alexander, 64665 Alsbach (DE); ZOLLER, Ingo, 63768 Hösbach (DE)
(86) Internationale Anmeldenummer: PCT/EP2012/064427
(87) Internationale Veröffentlichungsnummer: WO 2013/014129

(56) Entgegenhaltungen:
- DE-A1-102010 007 486
- FR-A1- 2 894 061
- JP-A- 2002 351 306
- US-A- 4 808 955
- US-A1- 2005 038 944
- US-A1- 2006 109 254
- US-A1- 2006 256 075
- US-A1- 2011 169 347

## Beschreibung

Die Erfindung betrifft eine Bedienvorrichtung mit einem Bedienelement mit haptischer Rückmeldung, wobei das Bedienelement von einem Bediener mittels eines Eingabeorgans betätigbar ist.

Haptische Rückmeldungen von Bedienelementen werden vor allen Dingen dann gefordert, wenn ein Bediener den von ihn ausgeführten Bedienvorgang nicht direkt wahrnehmen kann. Während bei Bedienvorrichtungen mit elektromechanischen Schaltern für einen Bediener das Öffnen oder Schließen der Schaltkontakte durch eine sich ändernde Haptik des Bedienelementes wahrnehmbar ist, ist dies bei elektronischen Schaltern nicht notwendigerweise vorhanden. Deshalb sind im Stand der Technik Bedienelemente bekannt, die die mittels für den Bediener wahrnehmbaren Bewegungen des Bedienelementes eine haptische Rückmeldung über einen erfolgten Bedienvorgang geben. Die bekannten haptischen Bedienelemente beispielsweise für sogenannte Touchscreens erfordern einen großen Bauraum, einen aufwändigen Antrieb und besondere konstruktive Maßnahmen, wenn diese beispielsweise in einem Umfeld eingesetzt werden sollen, die von besonders großen Temperaturunterschieden geprägt ist, wie beispielsweise im Kraftfahrzeug, welches sowohl in arktischer Kälte als auch in sommerlicher Hitze seine Funktionsfähigkeit erhalten soll.

Die vorangemeldete DE 10 2010 007 486.1 beschreibt eine derartige Bedienvorrichtung, die zwei ferromagnetische flächige Bauteile und eine Flachspule aufweist, wobei die ferromagnetischen flächigen Bauteile mit ihren größten Flächen zueinander ausgerichtet sind und relativ zueinander bewegbar sind und wobei die Flachspule zwischen den ferromagnetischen flächigen Bauteilen angeordnet ist. Hierbei ist die Eingabefläche entweder als Teil eines der ferromagnetischen flächigen Bauteile ausgestaltet oder mittels einer Koppelungsvorrichtung mit einem der ferromagnetischen Bauteile gekoppelt. Die ferromagnetischen flächigen Bauteile sind hierbei durch ein Bestromen der Flachspulen zueinander bewegbar, so dass die Bewegung eines der ferromagnetischen flächigen Bauteile direkt oder mittels einer Koppelungsvorrichtung für den Tastsinn des Bedieners an dem Bedienelement wahrnehmbar ist. Mit zweiflächigem Bauteil ist nur eine Bewegung vom Benutzer weg realisierbar. FR 2 894 061 A1 und JP 2002 351306 A beziehen sich beide auf ein Bedienelement mit taktiler Rückmeldung. Keines der beiden Dokumente offenbart die Merkmale eines ersten und eines zweiten ferromagnetischen flächigen Bauteils, mit denen eine erste und eine zweite Flachspule fest verbunden ist, wobei die Eingabefläche entweder als Teil des ersten oder zweiten ferromagnetischen Flächenbauteils ausgestaltet ist oder mittels einer Kopplungsvorrichtung mit dem ersten oder zweiten ferromagnetischen flächigen Bauteil gekoppelt ist. Aufgabe der Erfindung ist es, eine Bedienvorrichtung mit einem Bedienelement mit haptischer Rückmeldung anzugeben, welches einen geringen Bauraum benötigt, einfach aufgebaut ist und bei dem die Eingabefläche sowohl zum Bediener hin als vom Bediener weg bewegt werden kann. Diese Aufgabe wird mit dem kennzeichnenden Merkmal des Patentanspruchs 1 gelöst. Dadurch, dass sowohl dem ersten ferromagnetischen flächigen Bauteil als auch dem zweiten ferromagnetischen flächigen Bauteil jeweils mindestens eine Spule zugeordnet ist, ziehen sich die beiden ferromagnetischen flächigen Bauteile an oder stoßen sich ab, je nachdem, welches Magnetfeld die jeweiligen Spulen aufbauen. So bewegt sich beim Bestromen der Flachspulen die Eingabefläche entweder zum Bediener hin oder zum Bediener weg. Somit können sich mehr haptische Effekte realisieren lassen, als wenn sich das Bedienelement durch ein Bestromen der Spulen zunächst vom Bediener weg bewegt. Die Flachspulen können beispielsweise aus gewickelten, isolierten, leitenden Drähten bestehen, die beispielsweise spiralförmig ausgestaltet sind. Die Bediensicherheit wird erhöht, indem die erste Flachspule mit dem ersten ferromagnetischen flächigen Bauteil und die zweite Flachspule mit dem zweiten ferromagnetischen flächigen Bauteil fest verbunden ist. Dies kann beispielsweise durch ein Aufkleben der jeweiligen Flachspulen auf das jeweilige ferromagnetische flächige Bauteil realisiert sein. Besonders einfach lassen sich die Flachspulen und deren feste Verbindung mit dem flächigen ferromagnetischen Bauteil realisieren, wenn die erste und zweite Flachspule aus Leiterbahnen auf jeweils einer Leiterplatte realisiert sind. Diese Leiterplatte kann dann durch Kleben, Nieten oder durch sonstige bekannte Verbindungsmaßen mit dem jeweiligen flächigen ferromagnetischen Bauteil verbunden sein. Wenn die ersten und zweiten Flachspulen auf zwei Seiten der jeweiligen Leiterplatte angeordnet sind, werden besonders kompakte Flachspulen realisiert. Wenn die erste und zweite Flachspule jeweils einen ferromagnetischen Spulenkern aufweist, wird der magnetische Fluss gelenkt und die Kraftwirkung gesteigert. Diese Spulenkerne lassen sich besonders einfach realisieren, wenn sie als Teil jeweils des ersten bzw. zweiten ferromagnetischen flächigen Bauteils ausgestaltet sind. Wenn dem ersten und zweiten ferromagnetischen flächigen Bauteil jeweils mehrere Flachspulen zugeordnet sind, kann die Kraft, mit der die flächigen ferromagnetischen Bauteile zusammengezogen bzw. abgestoßen werden, vergrößert werden.

Wenn die Bedienvorrichtung ein elastisches Element aufweist, welches den Abstand der ferromagnetischen Fläche der Bauteile zueinander definiert wenn die Flachspulen unbestromt sind, kann eine Bedienung des Bedienelementes durch das Eingabeorgan festgestellt werden, sofern die Bedienvorrichtung eine Abstandsvorrichtung zum Messen des Abstandes zwischen dem ersten ferromagnetischen flächigen Bauteil und dem zweiten ferromagnetischen flächigen Bauteil aufweist. Wenn hier eine Veränderung des Abstandes gemessen wird, kann davon ausgegangen werden, dass der Abstand durch das Bedienorgan verändert wurde und so eine Bedienung des Bedienelementes festgestellt werden kann. Diese Messvorrichtung ist mit einfachen Mitteln zum Beispiel dadurch zu realisieren, dass sie als Messeinrichtung zur Messung der Induktivität der Flachspulen ausgestaltet ist. Es wird so kein zusätzliches Wegemessmittel benötigt. Vielmehr kann eine bereits vorhandene Flachspule durch ein einfaches Messen der Induktivität mittels eines elektronischen Schaltkreises, beispielsweise eines Mikrocomputers, der für die Ansteuerung der Bedienvorrichtung und evtl. sonstiger weiterer Geräte ausgestaltet und schon vorhanden ist, genutzt werden. Der Abstand der ferromagnetischen flächigen Bauteile zueinander kann ebenfalls einfach kapazitiv gemessen werden. Hierzu können beispielsweise auf einer Leiterplatte, auf der die erste und/oder zweite Flachspule angeordnet ist, zwei zusätzliche leitende Flächen angeordnet sein, deren Kapazität sich durch eine Abstandsänderung der ferromagnetischen flächigen Bauteile zu der Leiterplatte ändert. So kann auf den Abstand der beiden ferromagnetischen flächigen Bauteile geschlossen werden. Die beiden leitenden Flächen können gleichzeitig mit der Herstellung der Flachspulen durch Ätzen einer kupferkaschierten Leiterplatte oder durch Bedrucken mit einer Leitpaste hergestellt werden und erfordern so nur minimalen Mehraufwand. Die Flachspulen können ebenfalls zur Kapazitätsmessung herangezogen werden, solange sie noch unbestromt sind.

Das Bedienelement kann beispielsweise als Anzeige ausgestaltet sein. Diese Anzeige kann im einfachsten Fall beispielsweise aus einer Bedruckung mit verschiedenen Ziffern, beispielsweise in Form einer Telefontastatur, ausgestaltet sein. So können beispielsweise verschiedene Ziffern ausgewählt werden, wenn mit dem Bedienorgan das Bedienelement an der entsprechenden Ziffer berührt wird und die Anzeige eine entsprechende Vorrichtung aufweist, mit der die Position des Eingabeorgans auf der Anzeige bestimmbar ist. Wenn die zuvor beschriebene Anzeige als elektrooptische Anzeige ausgestaltet ist, können verschiedene Menüs, Untermenüs oder Einzelwerte auf der Anzeige dargestellt werden, die durch eine entsprechende Berührung der Anzeige an der entsprechenden Position der Darstellung des auszuwählenden Menüs, Untermenüs oder Wertes detektiert wird. Die optoelektronischen Anzeigen können beispielsweise als Leuchtdiodenmatrix, organisches Leuchtdiodendisplay oder Flüssigkristalldisplay ausgestaltet sein und sind bereits als sogenannte Touchscreens bekannt.

Die Flachspulen werden zum Bewegen der flächigen ferromagnetischen Bauteile zueinander mit einem Gleichstrom bestromt, wobei dieser Gleichstrom in kurzen Abständen in einer der beiden Spulen umgepolt werden kann, so dass sich die Abstände der ferromagnetischen flächigen Bauteile zueinander ändern. Zusätzlich kann dieser Strom mit einer Frequenz im Hörbereich, wie beispielsweise ein Kilohertz moduliert werden, so dass diese Frequenz zusätzlich hörbar ist. So kann ein Klick hörbar sein, der sich anhört, als sei ein mechanischer Schalter geöffnet oder geschlossen worden.

Schließlich können die Spulenkerne für die Flachspulen durch eine Verformung der ferromagnetischen flächigen Bauteile realisiert werden, beispielsweise durch Tiefziehen oder -senken. Hierdurch wird die Konstruktion weiter vereinfacht und im Preis reduziert.

Die Erfindung wird nachfolgend anhand der Figuren näher erläutert. Die Figuren zeigen:
- Figur 1: den grundsätzlichen Aufbau eines ersten Ausführungsbeispiels der erfindungsgemäßen Bedienvorrichtung,
- Figur 2: den Schnitt durch ein abgewandeltes Ausführungsbeispiel nach Figur 1,
- Figur 3: die Ansicht eines zweiten ferromagnetischen flächigen Bauteils und einer Leiterplatte,
- Figur 4: den Schnitt durch ein weiteres Ausführungsbeispiel der Erfindung und
- Figur 5: die Ansicht eines Ausführungsbeispiels in ein Gehäuse eingebaut.

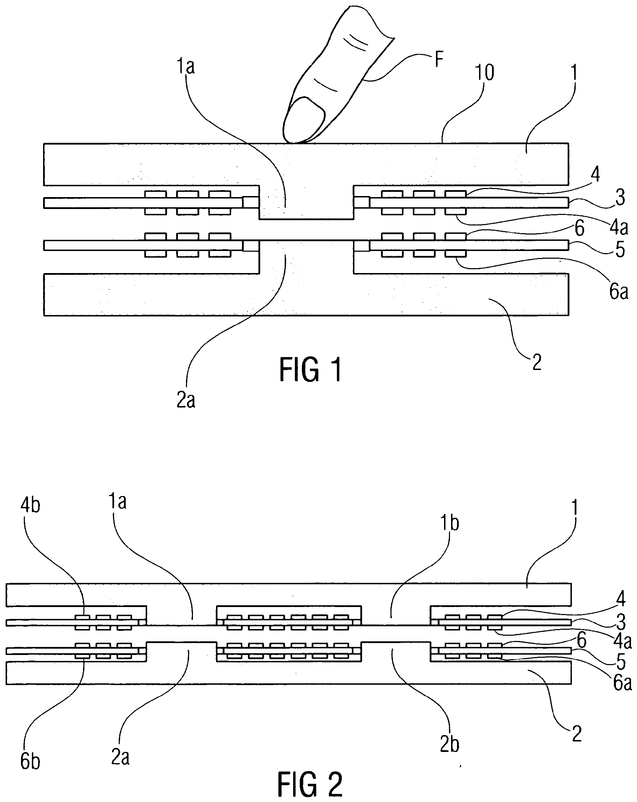

In Figur 1 erkennt man ein erstes ferromagnetisches flächiges Bauteil 1 mit einer Erhebung 1a, ein zweites ferromagnetisches flächiges Bauteil 2 mit einer Erhebung 2a, eine erste Leiterplatte 3 mit einer Flachspule 4, von der zwölf Schnitte 4a durch die einzelnen Windungen dargestellt sind, eine zweite Leiterplatte 5 mit einer zweiten Flachspule 6, von der ebenfalls zwölf Schnitte 6a durch die einzelnen Leiterbahnen der zweiten Flachspule dargestellt sind. Die Erhebung 1a des ferromagnetischen flächigen Bauteils 1 wirkt gleichzeitig als Spulenkern der ersten Flachspule 4, die Erhebung 2a des zweiten ferromagnetischen flächigen Bauteils 2 wirkt als Spulenkern der zweiten Flachspule 6. Wenn die erste und zweite Flachspule bestromt werden entsteht in dem ersten ferromagnetischen flächigen Bauteil 1 und in dem zweiten ferromagnetischen flächigen Bauteil 2 jeweils ein Magnetfeld: Die so aus den ferromagnetischen flächigen Bauteilen 1, 2 und Flachspulen 4, 6 entstehenden Elektromagnete ziehen sich je nach entstehendem Magnetfeld an oder stoßen sich ab, so dass sich das ferromagnetische flächige Bauteil 1 von dem dargestellten Finger F eines möglichen Bedieners weg bewegt wenn sich die ferromagnetischen flächigen Bauteile anziehen bzw. gegen den dargestellten Finger F drückt, wenn sich die beiden ferromagnetischen flächigen Bauteile abstoßen. In Figur 1 dient eine Seite des ersten ferromagnetischen flächigen Bauteils 1 als Eingabefläche 10.

Bei dem Ausführungsbeispiel in Figur 2 weist das erste ferromagnetische flächige Bauteil 1 eine weitere Erhebung 1b und das zweite ferromagnetische flächige Bauteil 2 zusätzlich eine Erhebung 2b auf. Weiterhin weist die erste Leiterplatte 3 zusätzlich Windungen 4b einer zusätzlichen ersten Flachspule 4 und die zweite Leiterplatte 5 zusätzliche Windungen 6b einer zusätzlichen zweiten Flachspule 6 auf. Hierbei lässt sich bei größeren Ausmaßen der Eingabefläche eine Vergleichmäßigung der auftretenden magnetischen Kräfte erzielen.

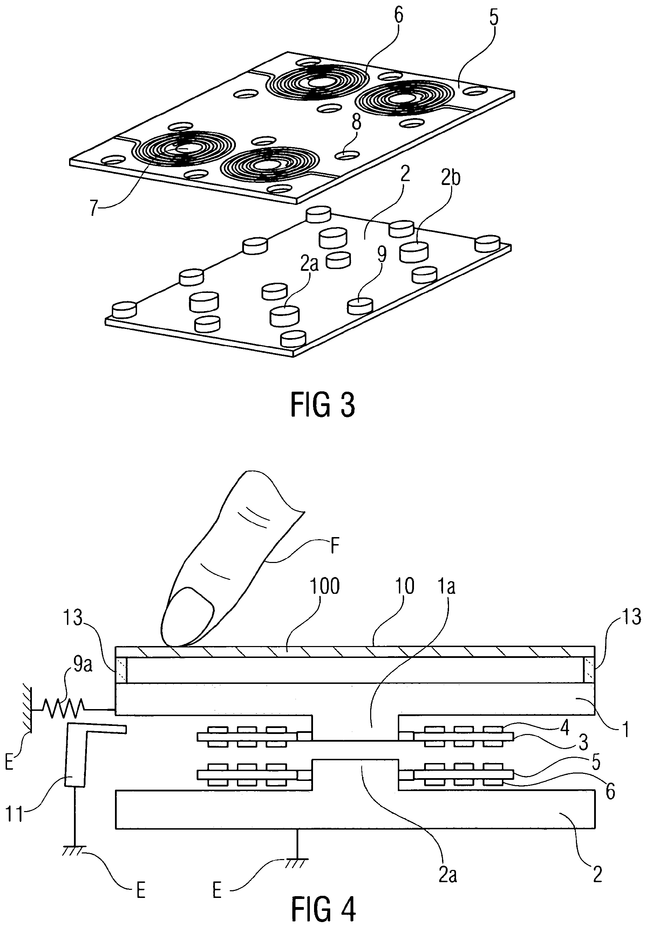

In Figur 3 erkennt man ein weiteres Ausführungsbeispiel eines zweiten ferromagnetischen flächigen Bauteils 2 und eine zweite Leiterplatte 5. Das ferromagnetische flächige Bauteil 2 weist insgesamt vier Erhebungen 2a, 2b auf. Weiterhin sind zwölf elastische Elemente 9 dargestellt, die beispielsweise als Silikonzylinder realisiert sein können. Die zweite Leiterplatte 5 weist vier zweite Flachspulen 6 mit jeweils einer Öffnung 7 auf, die zur Aufnahme der Erhebungen 2a, 2b ausgestaltet sind. Weiterhin erkennt man in der zweiten Leiterplatte 5 zwölf Öffnungen 8, durch die die elastischen Elemente 9 ragen. Die zu diesem Ausführungsbeispiel zugehörige erste Leiterplatte 3 und das zugehörige erste ferromagnetische flächige Bauteil 1 sind entsprechend aufgebaut.

Das in Figur 4 dargestellte Ausführungsbeispiel enthält neben den in Figur 1 bereits beschriebenen Bauteilen zusätzlich einen Touchscreen 100 mit einem Bedienelement in Form einer Eingabefläche 10, einen Anschlag 11 und ein elastisches Element 9a. Der Touchscreen 100 mit der Eingabefläche 10 ist über Koppelelemente in Form von Stegen 13 mit dem ersten ferromagnetischen flächigen Bauteil 1 gekoppelt. Die Erdzeichen E bedeuten, dass die mit den Erdzeichen verbundenen Bauteile, hier das zweite ferromagnetische flächige Bauteil 2, das elastische Element 9a und der Anschlag 11, eine feste definierte Position einnehmen. Im unbestromten Zustand der Flachspulen 3 und 6 definiert das elastische Element 9a die Lage des ersten ferromagnetischen flächiges Bauteils 1 und damit des Touchscreens 100, wenn keine äußere Kraft beispielsweise durch den Finger F eines möglichen Bedieners aufgebracht wird. Wenn die Flachspulen 4, 6 bestromt werden, bewegt sich das erste ferromagentische flächige Bauteil 1 und damit die Eingabefläche 10 mit dem Touchscreen 100 je nach Stromrichtung in Richtung auf den Finger F des Bedieners hin oder von dem Finger F des Bedieners weg. Diese Bewegung kann ein Bediener wahrnehmen. Dadurch, dass die Spulen derart bestromt werden, dass sich die ersten und zweiten ferromagnetischen flächigen Bauteile 1, 2 mehrfach aufeinander zu bewegen und voneinander entfernen, können bei unterschiedlicher Ausgestaltung dem Bediener unterschiedliche Informationen zurückgemeldet werden.

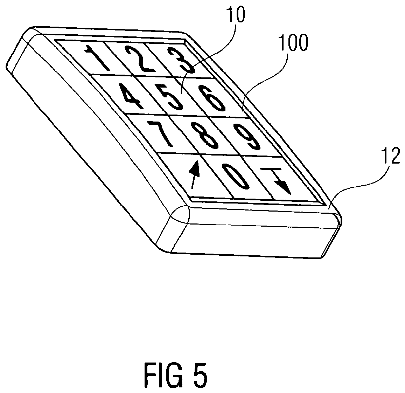

In Figur 5 erkennt man ein Ausführungsbeispiel einer erfindungsgemäßen Bedienvorrichtung in Aufsicht. Der Touchscreen 100 weist beispielsweise ein elektrooptisches Display wie beispielsweise ein Flüssigkeitskristalldisplay oder ein Leuchtdiodendisplay auf. In Figur 5 wird von dem elektrooptischen Display eine Telefontastatur dargestellt. Das elektrooptische Display kann aber auch sonstige Informationen wie beispielsweise Bedienmenüs oder einzeln einzustellende Bedienwerte darstellen. Innerhalb des Gehäuses 12 und unterhalb der Bedienoberfläche 10 sind auch die in den vorstehenden Figuren dargestellten Bauteile integriert.

## Patentansprüche

1. Bedienvorrichtung mit einem Bedienelement mit haptischer Rückmeldung, wobei das Bedienelement eine Eingabefläche (10) aufweist und von einem Bediener mittels eines Eingabeorgans (F) betätigbar ist, wobei die Bedienvorrichtung ein erstes und ein zweites ferromagnetisches flächiges Bauteil (1, 2) und eine erste Flachspule (4) aufweist, wobei die ersten und zweiten ferromagnetischen flächigen Bauteile (1, 2) mit ihren größten Flächen zueinander ausgerichtet sind und relativ zueinander bewegbar sind und wobei die erste Flachspule (4) zwischen den ersten und zweiten ferromagnetischen flächigen Bauteilen (1, 2) angeordnet ist, wobei die Eingabefläche (10) entweder als Teil des ersten oder zweiten ferromagnetischen flächigen Bauteils (1, 2) ausgestaltet ist oder mittels einer Koppelungsvorrichtung (13) mit dem ersten oder zweiten ferromagnetischen flächigen Bauteil (1, 2) gekoppelt ist, wobei eine zweite Flachspule (6) zwischen dem ersten und zweiten ferromagnetischen flächigen Bauteil (1, 2) angeordnet ist, wobei die erste Flachspule (4) dem ersten ferromagnetischen flächigen Bauteil (1) und die zweite Flachspule (6) dem zweiten ferromagnetischen flächigen Bauteil (2) zugeordnet ist, dass sich die beiden ferromagnetischen flächigen Bauteile anziehen oder abstoßen, je nachdem, welches Magnetfeld die jeweiligen Spulen aufbauen, und die Bewegung des ersten oder zweiten ferromagnetischen flächigen Bauteils (1, 2) direkt oder mittels der Koppelungsvorrichtung (13) für den Tastsinn des Bedieners an dem Bedienelement (10, 100) wahrnehmbar ist, und wobei die erste Flachspule (4) mit dem ersten ferromagnetischen flächigen Bauteil (1) und die zweite Flachspule (6) mit dem zweiten ferromagnetischen flächigen Bauteil (2) fest verbunden ist.

2. Bedienvorrichtung nach Anspruch 1, **dadurch gekennzeichnet, dass** die erste und zweite Flachspule (4, 6) aus Leiterbahnen auf jeweils einer Leiterplatte (3, 5) realisiert sind.

3. Bedienvorrichtung nach Anspruch 2, **dadurch gekennzeichnet, dass** die erste und zweite Flachspule (4, 6) auf zwei Seiten der jeweiligen Leiterplatte (3, 5) angeordnet sind.

4. Bedienvorrichtung nach einem der vorstehenden Ansprüche, **dadurch gekennzeichnet, dass** die erste und zweite Flachspule (4, 6) jeweils einen ferromagnetischen Spulenkern (1a, 2a) aufweist.

5. Bedienvorrichtung nach Anspruch 4, **dadurch gekennzeichnet, dass** die Spulenkerne (1a, 2a) jeweils als Teil des ersten und zweiten ferromagnetischen flächigen Bauteils (1, 2) ausgestaltet sind.

6. Bedienvorrichtung nach einem der vorstehenden Ansprüche, **dadurch gekennzeichnet, dass** dem ersten ferromagnetischen flächigen Bauteil (1) und dem zweiten ferromagnetischen flächigen Bauteil (2) jeweils mehrere Flachspulen (4, 6) zugeordnet sind.

7. Bedienvorrichtung nach einem der vorstehenden Ansprüche, **dadurch gekennzeichnet, dass** sie ein elastisches Element (9, 9a) aufweist, welches den Abstand zwischen dem ersten ferromagnetischen flächigen Bauteil (1) und dem zweiten ferromagnetischen flächigen Bauteil (2) zueinander definiert, wenn die erste und zweite Flachspule (4, 6) unbestromt sind.

8. Bedienvorrichtung nach einem der vorstehenden Ansprüche, **dadurch gekennzeichnet, dass** sie eine Abstandsmessvorrichtung zum Messen des Abstandes zwischen dem ersten ferromagnetischen flächigen Bauteil (1) und dem zweiten ferromagnetischen flächigen Bauteil (2) aufweist.

9. Bedienvorrichtung nach Anspruch 8, **dadurch gekennzeichnet, dass** die Messvorrichtung zum Messen der Änderung der Induktivität der Flachspulen (4, 6) ausgestaltet ist.

10. Bedienvorrichtung nach einem der vorstehenden Ansprüche, **dadurch gekennzeichnet, dass** das Bedienelement (10) als Anzeige (100) ausgestaltet ist.

11. Bedienvorrichtung nach Anspruch 10, **dadurch gekennzeichnet, dass** die Anzeige (100) eine Vorrichtung aufweist, mit der die Position des Eingabeorgans (F) auf der Anzeige (100) bestimmbar ist.

12. Bedienvorrichtung nach Anspruch 10 oder 11, **dadurch gekennzeichnet, dass** die Anzeige (100) als elektrooptische Anzeige ausgestaltet ist.

13. Bedienvorrichtung nach einem der vorstehenden Ansprüche, **dadurch gekennzeichnet, dass** die erste Flachspule (4) und die zweite Flachspule (6) mit einem im Hörfrequenzbereich modulierten Strom beaufschlagbar sind.

14. Bedienvorrichtung nach einem der Ansprüche 4 bis 13, **dadurch gekennzeichnet, dass** die ferromagnetischen Spulenkerne (1a, 1b, 2a, 2b) durch eine Verformung der ersten und zweiten ferromagnetischen flächigen Bauteile (1, 2) hergestellt sind.

## Claims

1. Operator control apparatus having an operator control element with haptic feedback, wherein Operator control element has an input area (10) and can be operated by an operator by means of an input member (F), wherein Operator control apparatus has a first and a second ferromagnetic areal component (1, 2) and a first flat coil (4), wherein the first and second ferromagnetic areal components (1, 2) have their largest areas oriented toward one another and can move relative to one another and wherein the first flat coil (4) is arranged between the first and second ferromagnetic areal components (1, 2), wherein the input area (10) is either in the form of part of the first or second ferromagnetic areal component (1, 2) or is coupled to the first or second ferromagnetic areal component (1, 2) by means of a coupling apparatus (13), wherein a second flat coil (6) is arranged between the first and second ferromagnetic areal components (1, 2), wherein the first flat coil (4) is associated with the first ferromagnetic areal component (1) and the second flat coil (6) is associated with the second ferromagnetic areal component (2), wherein the two ferromagnetic areal components attract or repel one another, depending on what magnetic field the respective coils set up, and the movement of the first or second ferromagnetic areal component (1, 2) is perceptible directly or by means of the coupling apparatus (13) to the sense of touch of Operator on Operator control element (10, 100), and wherein the first flat coil (4) is firmly connected to the first ferromagnetic areal component (1) and the second flat coil (6) is firmly connected to the second ferromagnetic areal component (2).

2. Operator control apparatus according to Claim 1, **characterized in that** the first and second flat coils (4, 6) are produced from conductor tracks on a respective printed circuit board (3, 5).

3. Operator control apparatus according to Claim 2, **characterized in that** the first and second flat coils (4, 6) are arranged on two sides of the respective printed circuit board (3, 5).

4. Operator control apparatus according to one of the preceding claims, **characterized in that** the first and second flat coils (4, 6) each have a ferromagnetic coil core (1a, 2a).

5. Operator control apparatus according to Claim 4, **characterized in that** the coil cores (1a, 2a) are each in the form of part of the first and second ferromagnetic areal components (1, 2).

6. Operator control apparatus according to one of the preceding claims, **characterized in that** the first ferromagnetic areal component (1) and the second ferromagnetic areal component (2) each have a plurality of associated flat coils (4, 6).

7. Operator control apparatus according to one of the preceding claims, **characterized in that** it has an elastic element (9, 9a) that defines the distance between the first ferromagnetic areal component (1) and the second ferromagnetic areal component (2) in relation to one another when the first and second flat coils (4, 6) carry no current.

8. Operator control apparatus according to one of the preceding claims, **characterized in that** it has a distance measuring apparatus for measuring the distance between the first ferromagnetic areal component (1) and the second ferromagnetic areal component (2).

9. Operator control apparatus according to Claim 8, **characterized in that** the measuring apparatus is designed to measure the change in the inductance of the flat coils (4, 6).

10. Operator control apparatus according to one of the preceding claims, **characterized in that** Operator control element (10) is in the form of a display (100).

11. Operator control apparatus according to Claim 10, **characterized in that** the display (100) has an apparatus that can be used to determine the position of the input member (F) on the display (100).

12. Operator control apparatus according to Claim 10 or 11, **characterized in that** the display (100) is in the form of an electro-optical display.

13. Operator control apparatus according to one of the preceding claims, **characterized in that** the first flat coil (4) and the second flat coil (6) can have a current that is modulated in the audio frequency range applied to them.

14. Operator control apparatus according to one of Claims 4 to 13, **characterized in that** the ferromagnetic coil cores (1a, 1b, 2a, 2b) are produced by deforming the first and second ferromagnetic areal components (1, 2).

## Revendications

1. Dispositif de commande avec un élément de commande avec retour haptique, l'élément de commande comportant une surface de saisie (10) et pouvant être actionné par un utilisateur à l'aide d'un organe de saisie (F), le dispositif de commande comportant un premier et un deuxième composant (1, 2) plan ferromagnétique et une première bobine plate (4), les premier et deuxième composants (1, 2) plans ferromagnétiques étant orientés les uns vers les autres avec leurs plus grandes surfaces et pouvant être déplacés les uns par rapport aux autres et la première bobine plate (4) étant disposée entre les premier et deuxième composants (1, 2) plans ferromagnétiques, la surface de saisie (10) étant configurée soit comme faisant partie du premier ou deuxième composant (1, 2) plan ferromagnétique ou étant couplée au moyen d'un dispositif de couplage (13) au premier ou deuxième composant (1) plan ferromagnétique, une deuxième bobine plate (6) étant disposée entre le premier et le deuxième composant (1, 2) plan ferromagnétique, la première bobine plate (4) étant associée au premier composant (1, 2) plan ferromagnétique et la deuxième bobine plate (6) étant associée au deuxième composant (2) plan ferromagnétique, les deux composants plans ferromagnétiques s'attirant ou se repoussant en fonction du champ magnétique appliqué aux bobines respectives, et le mouvement du premier ou deuxième composant (1, 2) plan ferromagnétique étant perceptible directement ou à l'aide du dispositif de couplage (13) pour le sens du toucher de l'utilisateur au niveau de l'élément de commande (10, 100), et la première bobine plate (4) étant reliée au premier composant (1) plan ferromagnétique et la deuxième bobine plate (6) étant reliée au deuxième composant (2) plan ferromagnétique.

2. Dispositif de commande selon la revendication 1, **caractérisé en ce que** les première et deuxième bobines plates (4, 6) sont réalisées sous la forme de pistes conductrices chacune sur une plaque conductrice (3, 5).

3. Dispositif de commande selon la revendication 2, **caractérisé en ce que** les première et deuxième bobines plates (4, 6) sont disposées sur deux côtés de la plaque conductrice respective (3, 5).

4. Dispositif de commande selon l'une quelconque des revendications précédentes, **caractérisé en ce que** la première et deuxième bobine plate (4, 6) comporte chacune un noyau de bobine (1a, 2a) ferromagnétique.

5. Dispositif de commande selon la revendication 4, **caractérisé en ce que** les noyaux de bobine (1a, 2a) sont chacun configurés comme faisant partie du premier et deuxième composant (1, 2) plan ferromagnétique.

6. Dispositif de commande selon l'une quelconque des revendications précédentes, **caractérisé en ce que** plusieurs bobines plates (4, 6) sont respectivement attribuées au premier composant (1) plan ferromagnétique et au deuxième composant (2) plan ferromagnétique.

7. Dispositif de commande selon l'une quelconque des revendications précédentes, **caractérisé en ce qu'**il comporte un élément élastique (9, 9a) définissant l'écartement entre le premier composant (1) plan ferromagnétique et le deuxième composant (2) plan ferromagnétique les uns par rapport aux autres lorsque les première et deuxième bobines plates (4, 6) ne sont pas alimentées.

8. Dispositif de commande selon l'une quelconque des revendications précédentes, **caractérisé en ce qu'**il comporte un dispositif de mesure d'écartement pour mesurer l'écartement entre le premier composant (1) plan ferromagnétique et le deuxième composant (2) plan ferromagnétique.

9. Dispositif de commande selon la revendication 8, **caractérisé en ce que** le dispositif de mesure est configuré pour mesurer la variation de l'inductivité des bobines plates (4, 6).

10. Dispositif de commande selon l'une quelconque des revendications précédentes, **caractérisé en ce que** l'élément de commande (10) est configuré sous la forme d'un affichage (100).

11. Dispositif de commande selon la revendication 10, **caractérisé en ce que** l'affichage (100) comporte un dispositif avec lequel la position de l'organe de saisie (F) peut être définie sur l'affichage (100).

12. Dispositif de commande selon la revendication 10 ou 11, **caractérisé en ce que** l'affichage (100) est configuré sous la forme d'un affichage électrooptique.

13. Dispositif de commande selon l'une quelconque des revendications précédentes, **caractérisé en ce que** la première bobine plate (4) et la deuxième bobine plate (6) peuvent être alimentées avec un courant modulé dans la plage des fréquences audibles.

14. Dispositif de commande selon l'une quelconque des revendications 4 à 13, **caractérisé en ce que** les noyaux de bobine ferromagnétiques (1a, 1b, 2a, 2b) sont fabriqués par une déformation des premier et deuxième composants (1, 2) plans ferromagnétiques.
